# FASCICULE DE BREVET EUROPEEN

(11) **EP 2 966 313 B1**
(45) Date de publication et mention de la délivrance du brevet: **19.10.2016**
(21) Numéro de dépôt: 15172637.9
(22) Date de dépôt: 18.06.2015
(51) Int. Cl.: F16F 15/123, F16H 45/02

(54) **Amortisseur pour dispositif de transmission de couple de véhicule automobile**
Dämpfer für eine Drehmomentübertragungseinrichtung eines Kraftfahrzeuges
Damper for a torque transmission device of a vehicle.

(30) Priorité: 11.07.2014 FR 1456726
(43) Date de publication de la demande: 13.01.2016
(73) Titulaire: Valeo Embrayages, 80009 Amiens Cedex 2 (FR)
(72) Inventeur: Hennebelle, Michaël, 62150 HOUDAIN (FR); Verhoog, Roel, 60190 GOURNAY SUR ARONDE (FR)

(56) Documents cités:
- WO-A1-2013/140082

## Description

L'invention concerne un amortisseur pour dispositif de transmission de couple de véhicule automobile et un dispositif de transmission de couple de véhicule automobile présentant un tel amortisseur.

Un amortisseur pour dispositif de transmission de couple de véhicule automobile est par exemple décrit dans les demandes FR-A-2 947 025 ou FR-A-2 988 455 au nom de la Demanderesse. Il permet de limiter la transmission des vibrations en torsion de l'arbre de sortie moteur à l'arbre d'entrée de boîte.

Le document WO2013/140082 A1 est considéré comme étant l'état de l'art le plus proche de l'invention et décrit toutes les caractéristiques du préambule de la revendication 1.

De manière connue, un tel amortisseur comporte un élément d'entrée de couple, un élément de sortie de couple, et des organes élastiques montés entre l'élément d'entrée et l'élément de sortie de couple, et agissant à l'encontre de la rotation de l'élément d'entrée et l'élément de sortie de couple l'un par rapport à l'autre.

Lorsque l'amortisseur est de type LTD (pour « Long Travel Damper », ou amortisseur à long débattement), il comprend plusieurs organes élastiques agencés par groupes, les organes élastiques d'un même groupe étant agencés en série par l'intermédiaire d'un organe de phasage de sorte que les organes élastiques de chaque groupe se déforment en phase les uns avec les autres. Les organes élastiques d'un même groupe peuvent être identiques ou présenter des caractéristiques différentes, notamment de longueur ou de raideur.

L'organe de phasage peut, en fonctionnement, comprimer les organes élastiques, aussi bien dans le sens de rotation dit sens direct que dans le sens de rotation opposé, dit sens « rétro ». Le sens direct correspond au cas de fonctionnement dans lequel un couple est transmis de l'élément d'entrée de couple vers l'élément de sortie de couple. Dans certaines phases de fonctionnement, par exemple lorsque l'utilisateur retire brusquement son pied de l'accélérateur, un couple résistant est transmis de l'élément de sortie de couple vers l'élément d'entrée de couple, ce qui peut provoquer une rotation de l'organe de phasage dans le sens « rétro ».

La compression des organes élastiques par l'organe de phasage peut alors provoquer des glissements des organes élastiques par rapport à l'élément d'entrée et/ou l'élément de sortie de couple. Ces glissements provoquent des hystérésis dans la transmission de couple par l'amortisseur. Ces glissements peuvent également provoquer une usure prématurée des organes élastiques par frottement sur l'organe d'entrée et/ou l'organe de sortie de couple.

Le but de la présente invention consiste à proposer un amortisseur pour dispositif de transmission de couple de véhicule automobile amélioré, ne présentant pas les inconvénients de l'art antérieur ou, tout du moins, limitant leurs effets.

Par ailleurs, il est connu de EP-A-0 093 287 un disque de friction pour embrayage comprenant des ressorts différents, reçus dans des fenêtres, de formes différentes, dans le disque de friction. Les fenêtres présentent notamment un côté radialement interne, qui est rectiligne. Les ressorts différents permettent notamment d'adapter la rigidité et l'effet d'atténuation des vibrations à différents états de charge de l'embrayage.

Afin d'atteindre le but de l'invention, il est proposé un amortisseur pour dispositif de transmission de couple de véhicule automobile comportant un élément d'entrée de couple, un élément de sortie de couple, au moins un groupe d'organes élastiques différents montés entre l'élément d'entrée et l'élément de sortie de couple et agissant à l'encontre de la rotation de l'élément d'entrée et de l'élément de sortie de couple l'un par rapport à l'autre, les organes élastiques du groupe d'organes élastiques étant agencés en série par l'intermédiaire d'un organe de phasage de telle sorte que les organes élastiques du groupe d'organes élastiques se déforment en phase les uns avec les autres, le groupe d'organes élastiques étant reçu dans un logement asymétrique par rapport à un plan radial médian du logement.

Ainsi, avantageusement, le logement recevant les organes élastiques peut être conformé pour assurer un guidage satisfaisant de chacun des organes élastiques, alors que dans l'art antérieur, seul un organe élastique par groupe était convenablement guidé, généralement le plus long ou le plus large.

Ou autrement dit, selon l'invention, on s'assure que tous les organes élastiques d'un même groupe d'organes élastiques sont, tout le long du logement, à proximité de la face interne du logement. Plus précisément, selon un aspect de l'invention, on s'assure que la distance mesurée entre la face interne du logement et une périphérie externe de chacun des organes élastique du groupe est sensiblement constante tout le long du logement.

Selon l'invention, la forme du logement est adaptée à la forme de chaque organe élastique d'un même groupe d'organe élastique pour assurer un guidage en cinématique de chacun des organes élastiques pendant leur compression. Ceci assure une meilleure maîtrise de l'hystérésis et du fonctionnement de l'amortisseur.

Selon des modes de réalisation préférés, l'amortisseur peut présenter une ou plusieurs des caractéristiques suivantes, prises seules ou en combinaison :
- le logement forme un tube cintré dont le rayon de cintrage mesuré le long du logement, par rapport au centre de l'amortisseur, est variable ; le rayon de cintrage est mesuré circonférentiellement le long du logement ;
- Tout le long du logement, la section transversale du logement présente une forme partiellement annulaire ;
- chaque logement comporte des premier et deuxième tronçons angulaires de rayons de cintrage moyens sensiblement constants et distincts, et un troisième tronçon reliant les premier et deuxième tronçons ;

- le troisième tronçon est conformé pour que les parois délimitant le logement soient continues et, de préférence, ne présentent pas de ruptures de pentes ;
- l'organe d'entrée de couple comporte une première et une deuxième rondelles de guidage, le logement étant au moins partiellement délimité par une oeillère dans la première et/ou la deuxième rondelle de guidage ;
- les organes élastiques sont des ressorts hélicoïdaux, de préférence droits ;
- au moins l'un, de préférence les deux, parmi le premier tronçon et le deuxième tronçon est conformé pour assurer, dans une position du dispositif de transmission de couple correspondant à une absence de transmission de couple depuis l'élément d'entrée de couple vers l'élément de sortie de couple, qu'au moins un organe élastique, de préférence les deux, est en contact avec une paroi du logement en six points distincts, de préférence deux des points de contact étant situés sur une paroi radialement interne du logement et les quatre autres points sur une paroi radialement externe du logement ;
- le groupe d'organes élastiques comporte au moins des premier et deuxième ressorts hélicoïdaux de diamètre identique et/ou de longueurs différentes ;
- le groupe d'organes élastiques comporte en outre au moins un troisième ressort hélicoïdal de longueur inférieure à la longueur du premier ressort hélicoïdal, de diamètre inférieur au diamètre du premier ressort hélicoïdal et disposé à l'intérieur du premier ressort hélicoïdal.

Selon un autre aspect, l'invention propose un dispositif de transmission de couple de véhicule automobile, comportant :
- un embrayage, comprenant un élément d'entrée couplé un premier arbre et un élément de sortie couplé à un deuxième arbre, et
- un amortisseur selon l'une des revendications précédentes, ledit amortisseur étant disposé entre l'élément de sortie de l'embrayage et le deuxième arbre.

Selon un mode de réalisation préféré, le dispositif de transmission peut présenter les caractéristiques suivantes :
- le dispositif comporte en outre une roue à aubes d'impulseur et une roue à aubes de turbine, la roue à aubes d'impulseur étant adaptée à entraîner hydrocinétiquement la roue à aubes de turbine par l'intermédiaire d'un réacteur, l'embrayage et la roue à aubes de turbine étant couplés audit élément de sortie.

L'invention sera mieux comprise à la lumière de la description qui va suivre, description faite en référence aux dessins annexés, parmi lesquels :
- la figure 1 représente schématiquement un dispositif de transmission de couple entre un arbre de sortie moteur et un arbre d'entrée de boîte de vitesses d'un véhicule automobile ;
- les figures 2 à 4 représentent schématiquement un amortisseur adapté à être mis en oeuvre dans le dispositif de transmission de couple de la figure 1, respectivement en perspective à l'état monté, en vue éclatée et vu de dessus ; et
- la figure 5 représente schématiquement en vue de dessus l'amortisseur des figures 2 à 4, dont une rondelle de guidage a été retirée.

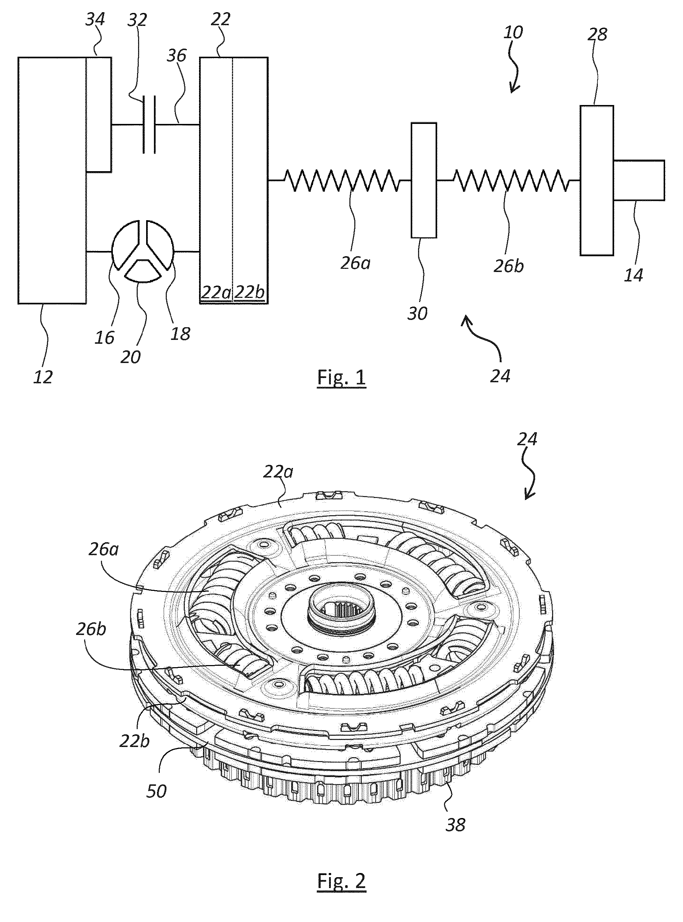

Un dispositif de transmission de couple 10 - ici un convertisseur de couple hydrodynamique - est représenté schématiquement sur la figure 1. Un tel dispositif de transmission de couple est par exemple mis en oeuvre dans une transmission automatique de véhicule automobile.

Le dispositif de transmission de couple peut être également dans un exemple non illustré un embrayage à disque.

Le dispositif de transmission de couple 10 permet de transmettre le couple d'un arbre de sortie moteur 12, classiquement le vilebrequin, à un arbre 14 d'entrée de boîte de vitesses.

Pour ce faire, le dispositif de transmission de couple 10 peut mettre en oeuvre deux voies parallèles.

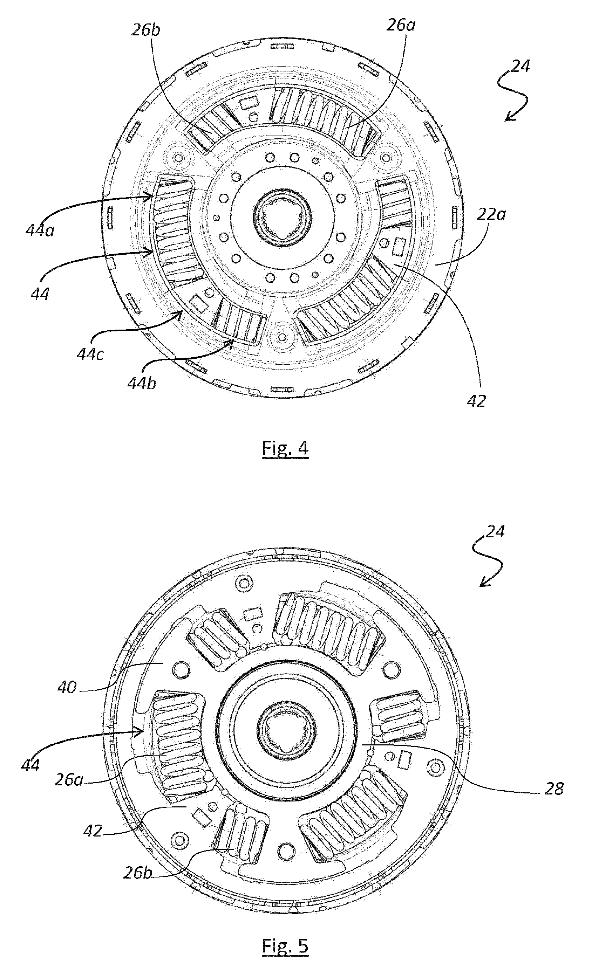

Une première voie, mise en oeuvre dans un premier temps, consiste à mettre en oeuvre une roue à aubes d'impulseur 16, apte à entraîner hydrocinétiquement une roue à aubes de turbine 18 par l'intermédiaire d'un réacteur 20. La roue d'impulseur 16 est couplée à l'arbre de sortie moteur 12. La roue de turbine 18 est couplée à un ensemble 22 de deux rondelles de guidage d'un amortisseur 24, dites respectivement ci-après rondelle de guidage avant 22a et rondelle de guidage arrière 22b. Ici, par exemple, la rondelle de guidage avant 22a est solidarisée en rotation avec la roue de turbine 18. Ceci peut notamment être réalisé au moyen de rivets. L'amortisseur 24, qui sera décrit plus en détail ci-après en regard des figures 2 à 5, comporte essentiellement un ou plusieurs groupes 26 d'organes élastiques 26a, 26b couplant l'ensemble de rondelles de guidage 22 à un voile annulaire 28 solidaire en rotation de l'arbre 14 d'entrée de boîte de vitesses. L'amortisseur 24 comporte également un organe de phasage 30 pour assurer que les organes élastiques 26a, 26b d'un même groupe 26 agissent en phase. L'amortisseur 24 permet de limiter la transmission des vibrations et du bruit depuis l'arbre de sortie moteur 12 vers l'arbre d'entrée de boîte de vitesses 14.

Selon une deuxième voie, le dispositif de transmission de couple 10 transmet le couple de l'arbre de sortie moteur 12 à l'arbre d'entrée de boîte de vitesses 14 à travers un embrayage 32 dit de verrouillage, l'embrayage 32 étant par exemple du type à disques. Cette deuxième voie est mise en oeuvre à la suite de la première, pour éviter le glissement indésirable entre les roues de turbine et d'impulseur en régime établi, c'est-à-dire après le couplage hydraulique de l'arbre de sortie moteur 12 et de l'arbre d'entrée de boîte de vitesses 14.

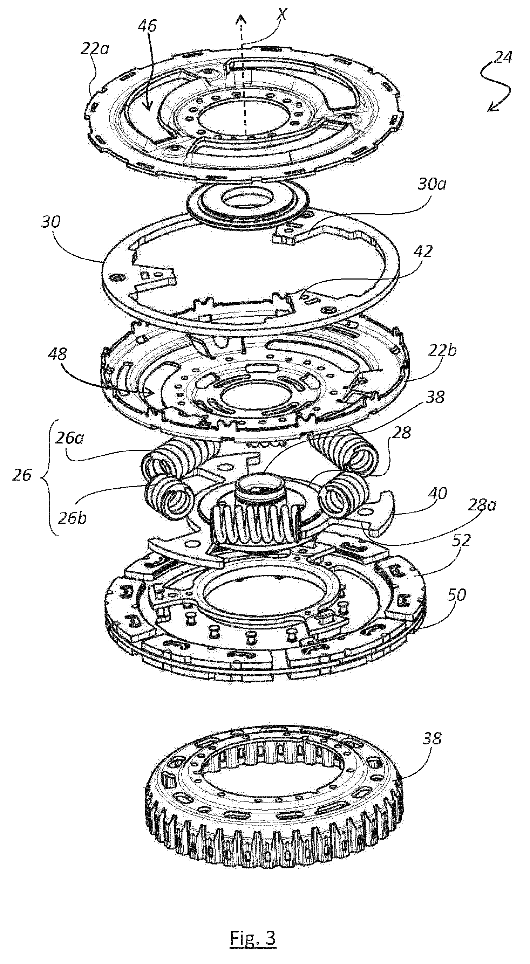

L'embrayage 32 comporte un élément d'entrée 34 couplé à l'arbre de sortie moteur 12, et un élément de sortie 36 couplé à l'ensemble de rondelles de guidage 22 au moyen d'un moyeu cannelé 38 (voir figures 2 et 3), de telle sorte que l'amortisseur 24 est également mis en oeuvre dans ce cas, pour transmettre le couple de l'arbre de sortie moteur 12 à l'arbre d'entrée de boîte de vitesses 14. Le moyeu cannelé 38 est ici fixé à la rondelle de guidage arrière 22b, par exemple à l'aide de rivets.

L'amortisseur 24, de type LTD, tel qu'illustré aux figures 2 à 5 est décrit plus en détails ci-dessous.

Les deux rondelles de guidage 22a, 22b de l'amortisseur 24 sont solidaires en rotation. Pour ce faire, ici, la rondelle de guidage avant 22a présente des fentes qui reçoivent des pattes 23 de la rondelle de guidage arrière 22b.

Ces deux rondelles de guidage 22a, 22b sont élastiquement couplées au voile annulaire 28 aux moyens des groupes 26 d'organes élastiques 26a, 26b. Les organes élastiques 26a, 26b peuvent être de longueurs différentes. Les organes élastiques 26a, 26b sont de préférence des ressorts droits à spires, qui présentent pour une même longueur, une plus grande souplesse que les ressorts courbés. Il est à noter qu'un troisième ressort hélicoïdal de longueur inférieure à la longueur du premier ressort hélicoïdal 26a, de diamètre inférieur au diamètre du premier ressort hélicoïdal 26a peut être disposé à l'intérieur du premier ressort hélicoïdal 26a.

L'organe de phasage 30, solidaire en rotation des rondelles de guidage 22a, 22b, permet d'assurer que les organes élastiques 26a, 26b de chaque groupe agissent en phase. Ainsi, la compression des organes élastiques 26a, 26b permet de filtrer les vibrations en torsion de l'arbre de sortie moteur 12 et de ne pas les transmettre, ou tout du moins à un niveau atténué, à l'arbre d'entrée de boîte de vitesses 14.

La compression des organes élastiques 26a, 26b est réalisée entre deux surfaces d'appui :
- l'une 28a solidaire du voile 28, ici formée par les côtés d'une patte radiale 40 du voile 28;
- l'autre 30a solidaire de l'organe de phasage 30, ici formée par les côtés d'une patte radiale 42 de l'organe de phasage 30.

Il est à noter ici que les deux surfaces d'appui 28a, 30a sont sensiblement inclinées par rapport à une direction radiale, par exemple d'un angle compris entre 2 et 6 °.

Par ailleurs, afin d'éviter ou tout du moins de réduire le glissement des organes élastiques en cas de compression, chaque groupe 26 d'organes élastiques 26a, 26b est reçu dans un logement 44 situé entre les deux rondelles de guidage 22a, 22b. Les parois de ce logement 44 sont formées par les rondelles de guidage 22a, 22b pour permettre le guidage des organes élastiques 26a, 26b au cours de leurs éventuelles compressions et éviter ainsi le glissement de ces organes élastiques 26a, 26b. Un volume interne du logement 44 situé entre les rondelles de guidage 22a, 22b est disponible pour l'implantation des organes élastiques.

Pour ce faire, les parois du logement formées par les rondelles de guidage 22a, 22b (et donc le logement lui-même) sont asymétriques par rapport à un plan radial médian du logement, c'est-à-dire par rapport à un plan orienté selon un rayon de l'amortisseur 24 et divisant le logement 44 en deux parties de longueur identique. La section transversale du volume interne du logement 44 varie le long du logement. Dans un exemple préféré, la section mesurée le long du logement 44 est décroissante. Il est ainsi possible de réaliser un logement permettant de guider plus efficacement les organes élastiques durant leur compression. En effet, les inventeurs ont constaté que les logements s'étendant selon une portion de tore, c'est-à-dire avec un rayon de courbure constant par rapport au centre de l'amortisseur, sont généralement prévus pour permettre de guider efficacement le plus grand des deux organes élastiques mis en oeuvre. Cependant, dans ce cas, l'organe élastique de dimension inférieure est alors soumis à du glissement, du fait que le guidage par les parois du logement de cet organe élastique n'est pas satisfaisant. Au contraire, ici, avec des parois asymétriques, il est possible d'adapter un tronçon des parois à l'un des deux organes élastiques et un autre tronçon, distinct du premier, à l'autre des deux organes élastiques, assurant ainsi un guidage convenable des deux organes élastiques par les parois du logement 44.

Les parois de chaque logement 44 formées par les rondelles de guidages 22a, 22b, peuvent notamment être formées par des oeillères 46, 48 dans les rondelles de guidage avant et arrière 22a, 22b, respectivement. Les oeillères 46, 48 sont formées par la déformation de la surface des rondelles de guidages 28a, 28b autour d'une ouverture laissant apparaître les ressorts 26a, 26b. La déformation de la surface des rondelles de guidages 22a, 22b est réalisée de manière que la forme de cette surface déformée corresponde sensiblement à la forme des ressorts reçus. En raison de la présence des ouvertures, la section transversale du logement 44 présente une forme partiellement annulaire.

Chaque logement 44 présente ainsi une forme de tube cintré, de rayon de cintrage variable par rapport au centre de l'amortisseur 24. Un premier tronçon 44a du logement 44, destiné à recevoir un plus grand ressort 26a, présente un rayon de courbure supérieur à un deuxième tronçon 44b, destiné à recevoir un plus petit ressort 26b. Un troisième tronçon 44c du logement 44, situé entre les premier et deuxième tronçons 44a, 44b assure la régularité des surfaces délimitant le logement 44, notamment leur continuité, de préférence sans ruptures de pentes. Plus précisément, ici, les surfaces d'appui des ressorts 26a, 26b définies par les oeillères sont cintrées et forment des portions de tore.

De manière préférée, au moins l'un parmi le premier tronçon 44a et le deuxième tronçon 44b est conformé pour assurer, dans une position de l'amortisseur correspondant à une absence de transmission de couple qu'au moins un organe élastique ou ressort 26a, 26b est en contact avec une paroi du logement, notamment avec les parois des oeillères 46, 48, en six points distincts. De manière encore préférée, le premier tronçon 44a et le deuxième tronçon 44b sont conformés pour assurer, dans une position de l'amortisseur correspondant à une absence de transmission de couple que les deux organes élastiques ou ressorts 26a, 26b sont en contact avec une paroi du logement, notamment avec les parois des oeillères 46, 48, en six points distincts.

De préférence, sur ces six points de contact, deux points de contacts sont situés sur une paroi radialement interne et les quatre autres points sur une paroi radialement externe du logement. De préférence également, sur ces points de contact, deux points de contacts, trois sont disposés sur la rondelle de guidage avant, et trois sont disposés sur la rondelle de guidage arrière.

Ainsi, les groupes d'organes élastiques 26 sont interposés fonctionnellement entre les rondelles de guidage 22a, 22b et le voile annulaire 28 pour amortir les vibrations provenant de l'arbre de sortie moteur et éviter leur propagation à l'arbre d'entrée de la boîte de vitesses. Cet amortissement est réalisé en comprimant les organes élastiques 26a, 26b. Cette compression des organes élastiques 26a, 26b est réalisée en limitant le glissement des organes élastiques 26a, 26b.

Par ailleurs, l'organe de phasage 30 est également solidaire en rotation d'un plateau 50 portant des pendules à masselottes 52, qui contribue à l'amortissement des vibrations.

Bien entendu, la présente invention ne se limite pas au seul exemple de mode de réalisation décrit ci-avant.

## Revendications

1. Amortisseur pour dispositif de transmission de couple de véhicule automobile comportant un élément d'entrée de couple (22), un élément de sortie de couple (28), au moins un groupe (26) d'organes élastiques différents (26a, 26b) montés entre l'élément d'entrée et l'élément de sortie de couple et agissant à l'encontre de la rotation de l'élément d'entrée (22) et de l'élément de sortie de couple (28) l'un par rapport à l'autre, les organes élastiques (26a, 26b) du groupe d'organes élastiques étant agencés en série par l'intermédiaire d'un organe de phasage (30) de telle sorte que les organes élastiques (26a, 26b) du groupe (26) d'organes élastiques se déforment en phase les uns avec les autres, ledit amortisseur étant **caractérisé en ce que** J le groupe (26) d'organes élastiques (26a, 26b) est reçu dans un logement (44) asymétrique par rapport à un plan radial médian du logement (44).

2. Amortisseur selon la revendication 1, dans lequel le logement (44) forme un tube cintré dont le rayon de cintrage mesuré le long du logement, par rapport au centre de l'amortisseur, est variable.

3. Amortisseur selon l'une des revendications 1 à 2, dans lequel, tout le long du logement (44), la section transversale du logement (44) présente une forme partiellement annulaire.

4. Amortisseur selon l'une des revendications 1 à 3, dans lequel chaque logement (44) comporte des premier (44a) et deuxième (44b) tronçons angulaires de rayons de cintrage moyens sensiblement constants et distincts, et un troisième tronçon (44c) reliant les premier et deuxième tronçons (44a, 44b).

5. Amortisseur selon la revendication 4, dans lequel le troisième tronçon est conformé pour que les parois délimitant le logement soient continues et, de préférence, ne présentent pas de ruptures de pentes.

6. Amortisseur selon l'une quelconque des revendications précédentes, dans lequel l'organe d'entrée de couple comporte une première (22a) et une deuxième (22b) rondelles de guidage, le logement étant au moins partiellement délimité par une oeillère (46, 48) dans la première et/ou la deuxième rondelle de guidage (22a, 22b).

7. Amortisseur selon la revendication 4, dans lequel au moins l'un, de préférence les deux, parmi le premier tronçon et le deuxième tronçon est conformé pour assurer, dans une position du dispositif de transmission de couple correspondant à une absence de transmission de couple depuis l'élément d'entrée de couple vers l'élément de sortie de couple, qu'au moins un organe élastique, de préférence les deux, est en contact avec une paroi du logement en six points distincts, de préférence deux des points de contact étant situés sur une paroi radialement interne du logement et les quatre autres points sur une paroi radialement externe du logement.

8. Amortisseur selon l'une quelconque des revendications précédentes, dans lequel les organes élastiques (26a, 26b) sont des ressorts hélicoïdaux, de préférence droits.

9. Amortisseur selon l'une des revendications précédentes, dans lequel chaque groupe (26) d'organes élastiques comportent au moins des premier (26a) et deuxième (26b) ressorts hélicoïdaux de diamètre identique et/ou de longueurs différentes.

10. Amortisseur selon la revendication 9 , dans lequel le groupe (26) d'organes élastiques (26a, 26b) comporte en outre au moins un troisième ressort hélicoïdal de longueur inférieure à la longueur du premier ressort hélicoïdal (26a), de diamètre inférieur au diamètre du premier ressort hélicoïdal (26a) et disposé à l'intérieur du premier ressort hélicoïdal (26a).

11. Dispositif de transmission de couple de véhicule automobile (10), comportant :
- un embrayage (32), comprenant un élément d'entrée (34) couplé à un premier arbre (12) et un élément de sortie (22) couplé à un deuxième arbre (14), et
- un amortisseur selon l'une des revendications précédentes, ledit amortisseur étant disposé entre l'élément de sortie de l'embrayage et le deuxième arbre.

12. Dispositif selon la revendication précédente, comportant en outre une roue à aubes d'impulseur (16) et une roue à aubes de turbine (18), la roue à aubes d'impulseur étant adaptée à entraîner hydrocinétiquement la roue à aubes de turbine (18) par l'intermédiaire d'un réacteur (20), l'embrayage (32) et la roue à aubes de turbine (18) étant couplés audit élément de sortie (22).

## Patentansprüche

1. Dämpfer für eine Drehmomentübertragungseinrichtung eines Kraftfahrzeugs mit einem Drehmomenteingangselement (22), einem Drehmomentausgangselement (28), mindestens einer Gruppe (26) von verschiedenen elastischen Elementen (26a, 26b), die zwischen dem Drehmomenteingangs- und dem Drehmomentausgangsmoment befestigt sind und in Bezug aufeinander der Drehung des Drehmomenteingangselements (22) und des Drehmomentausgangselements (28) entgegenwirken, wobei die elastischen Elemente (26a, 26b) der Gruppe von elastischen Elementen mittels einer Phaseneinrichtung (30) in Reihe angeordnet sind, sodass sich die elastischen Elemente (26a, 26b) der Gruppe (26) von elastischen Elementen in Phase miteinander verformen, wobei der Dämpfer **dadurch gekennzeichnet ist, dass** die Gruppe (26) von elastischen Elementen (26a, 26b) in einer Aufnahme (44) aufgenommen ist, die relativ zu einer Radialmittelebene der Aufnahme (44) asymmetrisch ist.

2. Dämpfer nach Anspruch 1, wobei die Aufnahme (44) ein gekrümmtes Rohr bildet, dessen Krümmungsradius, entlang der Aufnahme gemessen, relativ zu der Mitte des Dämpfers variabel ist.

3. Dämpfer nach einem der Ansprüche 1 bis 2, wobei der Querschnitt der Aufnahme (44) entlang der gesamten Aufnahme (44) eine teilweise ringförmige Form aufweist.

4. Dämpfer nach einem der Ansprüche 1 bis 3, wobei jede Aufnahme (44) ein erstes (44a) und ein zweites (44b) Winkelsegment mit im Wesentlichen konstanten und verschiedenen mittleren Biegeradien und ein drittes Segment (44c), welches das erste und zweite Segment (44a, 44b) miteinander verbindet, aufweist.

5. Dämpfer nach Anspruch 4, wobei das dritte Segment so ausgebildet ist, dass die Wände, welche die Aufnahme begrenzen, durchgehend sind und vorzugsweise keine Stufen aufweisen.

6. Dämpfer nach einem der vorhergehenden Ansprüche, wobei das Drehmomenteingangselement einen ersten (22a) und einen zweiten (22b) Führungsring aufweist, und wobei die Aufnahme zumindest teilweise durch eine Blende (46, 48) in dem ersten und/oder zweiten Führungsring (22a, 22b) begrenzt wird.

7. Dämpfer nach Anspruch 4, wobei mindestens eines, vorzugsweise zwei von dem ersten Segment und dem zweiten Segment so ausgebildet sind, dass sie in einer Position der Drehmomentübertragungseinrichtung, die dem Ausbleiben einer Drehmomentübertragung von dem Drehmomenteingangselement zu dem Drehmomentausgangselement entspricht, sicherstellen, dass mindestens ein elastisches Element, vorzugsweise beide, an sechs verschiedenen Punkten mit einer Wand der Aufnahme in Kontakt ist, vorzugsweise an zwei der Kontaktpunkte an einer radial inneren Wand der Aufnahme und an den vier anderen Punkten an einer radial äußeren Wand der Aufnahme.

8. Dämpfer nach einem der vorhergehenden Ansprüche, wobei die elastischen Elemente (26a, 26b) Schraubenfedern sind, vorzugsweise gerade.

9. Dämpfer nach einem der vorhergehenden Ansprüche, wobei jede Gruppe (26) von elastischen Elementen mindestens eine erste (26a) und eine zweite (26b) Schraubenfeder von identischem Durchmesser und/oder verschiedener Länge aufweist.

10. Dämpfer nach Anspruch 9, wobei die Gruppe (26) von elastischen Elementen (26a, 26b) außerdem mindestens eine dritte Schraubenfeder aufweist, deren Länge kleiner ist als die Länge der ersten Schraubenfeder (26a), deren Durchmesser kleiner ist als der Durchmesser der ersten Schraubenfeder (26a) und die im Inneren der ersten Schraubenfeder (26a) angeordnet ist.

11. Drehmomentübertragungseinrichtung für ein Kraftfahrzeug (10) mit:
- einer Kupplung (32), die ein mit einer ersten Welle (12) gekoppeltes Eingangselement (34) und ein mit einer zweiten Welle (14) gekoppeltes Ausgangselement (22) umfasst, und
- einem Dämpfer nach einem der vorhergehenden Ansprüche, wobei der Dämpfer zwischen dem Ausgangselement der Kupplung und der zweiten Welle angeordnet ist.

12. Einrichtung nach dem vorhergehenden Anspruch, die außerdem ein Impulsgeberschaufelrad (16) und ein Turbinenschaufelrad (18) aufweist, wobei das Impulsgeberschaufelrad geeignet ist, das Turbinenschaufelrad (18) über einen Reaktor (20) hydrokinetisch anzutreiben, wobei die Kupplung (32) und das Turbinenschaufelrad (18) mit dem Ausgangselement (22) gekoppelt sind.

## Claims

1. Damper for a motor vehicle torque transmission device comprising a torque input element (22), a torque output element (28), at least one group (26) of different elastic members (26a, 26b) mounted between the torque input element and the torque output element and acting against the rotation of the torque input element (22) and the torque output element (28) with respect to one another, the elastic members (26a, 26b) of the group of elastic members being arranged in series by means of a phasing member (30) such that the elastic members (26a, 26b) of the group (26) of elastic members deform in phase with one another, the said damper being **characterized in that** the group (26) of elastic members (26a, 26b) is received in a housing (44) which is asymmetrical with respect to a median radial plane of the housing (44).

2. Damper according to Claim 1, in which the housing (44) forms a bent tube whose bending radius, measured along the housing with respect to the centre of the damper, is variable.

3. Damper according to either of Claims 1 and 2, in which the cross section of the housing (44) has a partially annular shape over the entire length of the housing (44).

4. Damper according to one of Claims 1 to 3, in which each housing (44) comprises first (44a) and second (44b) angular segments having substantially constant and separate average bending radii, and a third segment (44c) connecting the first and second segments (44a, 44b).

5. Damper according to Claim 4, in which the third segment is configured so that the walls delimiting the housing are continuous and, preferably, do not have any breaks in slope.

6. Damper according to any one of the preceding claims, in which the torque input element comprises a first (22a) and a second (22b) guide washer, the housing being at least partially delimited by an aperture (46, 48) in the first and/or the second guide washer (22a, 22b).

7. Damper according to Claim 4, in which at least one, preferably both, of the first segment and the second segment is configured to ensure that, with the torque transmission device in a position corresponding to an absence of torque transmission from the torque input element to the torque output element, at least one elastic member, preferably both, is in contact with a wall of the housing at six separate points, preferably two of the contact points being situated on a radially inner wall of the housing and the other four points on a radially outer wall of the housing.

8. Damper according to any one of the preceding claims, in which the elastic members (26a, 26b) are helical, preferably straight, springs.

9. Damper according to one of the preceding claims, in which each group (26) of elastic members comprises at least first (26a) and second (26b) helical springs having an identical diameter and/or different lengths.

10. Damper according to Claim 9, in which the group (26) of elastic members (26a, 26b) additionally comprises at least one third helical spring which has a length less than the length of the first helical spring (26a), has a diameter less than the diameter of the first helical spring (26a) and is arranged inside the first helical spring (26a).

11. Motor vehicle torque transmission device (10) comprising:
- a clutch (32) comprising an input element (34) coupled to a first shaft (12) and an output element (22) coupled to a second shaft (14), and
- a damper according to one of the preceding claims, the said damper being arranged between the output element of the clutch and the second shaft.

12. Device according to the preceding claim, additionally comprising a bladed impeller wheel (16) and a bladed turbine wheel (18), the bladed impeller wheel being adapted to hydrokinetically drive the bladed turbine wheel (18) by means of a reactor (20), the clutch (32) and the bladed turbine wheel (18) being coupled to the said output element (22).
